# EUROPÄISCHE PATENTANMELDUNG

(11) **EP 3 567 798 A1**
(43) Veröffentlichungstag der Anmeldung: **13.11.2019**
(21) Anmeldenummer: 18171062.5
(22) Anmeldetag: 07.05.2018
(51) Int. Cl.: H04L 9/32

(54) **VERFAHREN ZUR AUTHENTIFIZIERUNG**

(71) Anmelder: Siemens Aktiengesellschaft, 80333 München (DE)
(72) Erfinder: Hessenauer, Jürgen, 91578 Leutershausen (DE); Spindler, Carsten, 07368 Remptendorf (DE)

(57) **Zusammenfassung**

Die Erfindung betrifft ein Verfahren zur Authentifizierung einer Komponente (K...K6) durch eine Recheneinheit (R), wobei ein auf einer eindeutigen Komponenteneigenschaft (2) basierender Komponentenwert mittels eines privaten Schlüssels und eines Verschlüsselungs- und/oder Entschlüsselungsmoduls zu einem verschlüsselten Komponentenwert verschlüsselt wird, wobei der verschlüsselte Komponentenwert auf einer nichtflüchtigen Speichereinheit (4) der Komponente (K...K6) gespeichert wird, wobei der verschlüsselte Komponentenwert von der Recheneinheit (R) mittels eines öffentlichen Schlüssels und des Verschlüsselungs- und/oder Entschlüsselungsmoduls zu einem entschlüsselten Komponentenwert entschlüsselt wird, wobei die Recheneinheit (R) den Komponentenwert ermittelt, wobei zur Authentifizierung der Komponente (K...K6) die Recheneinheit (R) den entschlüsselten Komponentenwert mit dem von der Recheneinheit (R) ermittelten Komponentenwert vergleicht, wobei eine Authentizität der Komponente (K...K6) bei Übereinstimmung des entschlüsselten Komponentenwerts und des ermittelten Komponentenwerts bezeugt wird. Ferner betrifft die Erfindung eine Komponente (K...K6) geeignet für ein derartiges Verfahren, eine Recheneinheit (R) geeignet für ein derartiges Verfahren sowie ein System umfassend wenigstens eine derartige Komponente (K...K6), wenigstens eine derartige Recheneinheit (R) und wenigstens eine Steuereinheit (S).

## Beschreibung

Die Erfindung betrifft ein Verfahren zur Authentifizierung einer Komponente durch eine Recheneinheit.

Ein Maschinenbauer, der an einen Kunden ein System liefert, welches wenigstens eine Recheneinheit und wenigstens eine Komponente, insbesondere elektronische Komponente, umfasst, möchte gerne auch ein Ersatzteil- und/oder Servicegeschäft übernehmen. Hierbei ist es wichtig, dass der Maschinenbauer sicherstellen kann, dass sein Kunde bei einem Defekt der Komponente eine neue Komponente nur über den Maschinenbauer bezieht und die neue Komponente nicht direkt bei einem Hersteller ordert.

Eine Lieferkette der Komponente soll sich demnach wie folgt gestalten:
Der Hersteller stellt die Komponente her.
Der Hersteller liefert die Komponente an den Maschinenbauer. Der Maschinenbauer liefert die Komponente an den Kunden.

Um sicherzustellen, dass der Kunde die Komponente nur über den Maschinenbauer bezieht, kann der Hersteller Seriennummernbänder zur Kennzeichnung der Komponenten zur Verfügung stellen. D. h. einem ersten Maschinenbauer wird ein erstes Seriennummernband - z. B. ein Bereich von Zahlen und/oder Buchstaben - und einem zweiten Maschinenbauer wird ein zweites Seriennummernband vom Hersteller zugewiesen. Alle Komponenten, die für den ersten Maschinenbauer hergestellt werden, erhalten eine Seriennummer aus dem ersten Seriennummernband.

Der Maschinenbauer kennt sein Seriennummernband und kann somit manuell und/oder mittels eines Programms in der Recheneinheit überprüfen, ob die Seriennummer der angebundenen Komponente seinem Seriennummernband entstammt.

Dies bringt jedoch einen hohen logistischen Aufwand, insbesondere für den Hersteller, mit sich. Zudem ist eine Anzahl der Seriennummernbänder begrenzt.

Der Erfindung liegt die Aufgabe zugrunde, eine Authentifizierung von Komponenten zu verbessern.

Die Lösung der Aufgabe gelingt durch die Merkmale des Anspruchs 1, d. h. ein Verfahren zur Authentifizierung einer Komponente durch eine Recheneinheit, wobei ein auf einer eindeutigen Komponenteneigenschaft basierender Komponentenwert mittels eines privaten Schlüssels und eines Verschlüsselungs- und/oder Entschlüsselungsmoduls zu einem verschlüsselten Komponentenwert verschlüsselt wird, wobei der verschlüsselte Komponentenwert auf einer nicht-flüchtigen Speichereinheit der Komponente gespeichert wird, wobei der verschlüsselte Komponentenwert von der Recheneinheit mittels eines öffentlichen Schlüssels und des Verschlüsselungs- und/oder Entschlüsselungsmoduls zu einem entschlüsselten Komponentenwert entschlüsselt wird, wobei die Recheneinheit den Komponentenwert ermittelt, wobei zur Authentifizierung der Komponente die Recheneinheit den entschlüsselten Komponentenwert mit dem von der Recheneinheit ermittelten Komponentenwert vergleicht, wobei eine Authentizität der Komponente bei Übereinstimmung des entschlüsselten Komponentenwerts und des ermittelten Komponentenwerts bezeugt wird.

Die Lösung der Aufgabe gelingt zudem durch die Merkmale des Anspruchs 10, d. h. eine Komponente geeignet für ein derartiges Verfahren sowie durch die Merkmale des Anspruchs 12, d. h. eine Recheneinheit geeignet für ein derartiges Verfahren.

Ferner gelingt die Lösung der Aufgabe durch die Merkmale des Anspruchs 14, d. h. ein System umfassend wenigstens eine derartige Komponente, wenigstens eine derartige Recheneinheit und wenigstens eine Steuereinheit.

Die Steuereinheit ist vorzugsweise eine überlagerte Steuereinheit. Die Steuereinheit ist vorzugsweise mit der Recheneinheit verbunden.

Die Steuereinheit steuert vorteilhaft eine auf der Recheneinheit vorliegende Software bzw. ein vorliegendes Programm (im Programm bzw. in der Software wird das erfindungsgemäße Verfahren vorzugsweise durchgeführt), z. B. gibt die Steuereinheit ein Signal zum Starten der Software.

Die Komponente ist beispielsweise ein Motor, Umrichter oder eine andere Einspeisevorrichtung, ein Terminalmodul, Sensor, Geber oder ein Steuerwerk. Jedoch ist die Erfindung auch für andere Arten von Komponenten geeignet.

Die Steuereinheit ist beispielsweise eine Steuereinheit für Bewegungsregelung und/oder Bewegungssteuerung (auch Motion Control).

Die Recheneinheit wird vorteilhaft bei der additiven Fertigung, Umformtechnik, Holzbearbeitung, beim Converting, Leichtbau, bei Druckmaschinen, Fördersystemen, Handlingsystemen, Kunststoffmaschinen, Textilmaschinen, Verpackungsmaschinen, in der Glasverarbeitung und Prozessindustrie usw. eingesetzt.

Die Recheneinheit und/oder Steuereinheit kann auch, insbesondere im Bereich der Werkzeugmaschinen, für verschiedene Digitalisierungslösungen, Bearbeitungstechnologien oder CNC-Systeme eingesetzt werden.

Die Recheneinheit und/oder Steuereinheit kann ferner in der Automatisierungstechnik oder Leittechnik oder bei Produktionsleitsystemen eingesetzt werden.

Auch andere Einsatz- und/oder Anwendungsgebiete sind möglich.

Erfindungsgemäß wird der auf der eindeutigen Komponenteneigenschaft basierende Komponentenwert mittels des privaten Schlüssels und des Moduls zum verschlüsselten Komponentenwert verschlüsselt. In anderen Worten bedeutet dies: Eine Signatur der Komponente wird erstellt.

Die Recheneinheit analysiert vorteilhaft, welche Komponenten angeschlossen sind und signiert wenigstens eine Komponente, vorzugsweise mehrere Komponenten.

Der Verschlüsselungs- und/oder Entschlüsselungsmodul wird im Folgenden ebenso als Modul bezeichnet.

Die nicht-flüchtige Speichereinheit ist vorteilhaft ein Speicher, dessen gespeicherte Informationen auf Dauer erhalten bleiben. Sie bleiben auch dann erhalten, wenn eine Komponente, in welcher die Speichereinheit eingefügt ist, nicht in Betrieb ist oder nicht mit Strom versorgt wird. Nicht-flüchtige Speicher sind beispielsweise Festplatten, CDs, DVDs oder Disketten sowie Halbleiterspeicher-Bausteine wie EPROM, EEPROM und Flash-Speicher.

Die Speichereinheit ist vorzugsweise unlösbar mit der Komponente verbunden.

In einer vorteilhaften Ausführungsform der Erfindung werden der private Schlüssel, der öffentliche Schlüssel und der Modul auf Basis eines asymmetrischen kryptografischen Verfahrens erzeugt.

Vorzugsweise werden der private Schlüssel, der öffentliche Schlüssel und der Modul beim Maschinenbauer erzeugt.

Der Maschinenbauer baut beispielsweise Werkzeugmaschinen oder Wellpappmaschinen oder Riffelwalzen, insbesondere für Wellpappanlagen. Jedoch sind auch andere Maschinenarten möglich.

In einer weiteren vorteilhaften Ausführung ist das asymmetrische kryptografische Verfahren ein RSA-Verfahren.

Ein RSA-Verfahren kann ein RSA-Signaturverfahren oder ein RSA-Verschlüsselungsverfahren sein.

Vorzugsweise wird in der Erfindung das RSA-Signaturverfahren eingesetzt. Das RSA-Signaturverfahren ist eine Umkehrung des RSA-Verschlüsselungsverfahrens.

Beim RSA-Verfahren werden die beiden Schlüssel und der Modul wie folgt erzeugt:
Zwei zufällige und stochastisch unabhängige Primzahlen p und q werden gewählt. Die Primzahl p ist ungleich der Primzahl q. Es gilt: p ≠ q.

Der Modul n entspricht einem Produkt der Primzahlen p und q. Es gilt: n = p·q.

Die Eulersche ϕ-Funktion vom Modul n wird berechnet mittels ϕ(n) = (p-1) · (q-1).

Zu ϕ(n) wird eine teilerfremde Zahl e gewählt mittels e mit ggt (e, ϕ(n)) = 1.

Die teilerfremde Zahl e ist der öffentliche Schlüssel. Auch der Modul n ist öffentlich.

Es wird der private Schlüssel d berechnet, wobei folgender Zusammenhang gilt: d·e mod ϕ(n) = 1.

Beim RSA-Signaturverfahren wird eine Nachricht m mit dem privaten Schlüssel d verschlüsselt und erzeugt so die Signatur s.
Es gilt: s = m^{d} mod n

Entschlüsselt werden kann die Signatur s mit dem öffentlichen Schlüssel e und man erhält so die Nachricht m.
Es gilt: m = s^{e} mod n

Erfindungsgemäß wird anstelle der Nachricht der auf der eindeutigen Komponenteneigenschaft basierende Komponentenwert verschlüsselt.

In einer weiteren vorteilhaften Ausführungsform der Erfindung ist die eindeutige Komponenteneigenschaft eine Hardware-Eigenschaft.

Eine Hardware-Eigenschaft ist eine Eigenschaft der Komponente, die im Wesentlichen unveränderlich ist. Die Hardware-Eigenschaft kennzeichnet die Komponente eindeutig.

Im Wesentlichen unveränderlich bedeutet hier: Sie ist gleichbleibend, invariabel bzw. von Dauer.

Die Hardware-Eigenschaft kann vorzugsweise nur durch einen unerlaubten Eingriff verändert werden. Vorteilhaft ist die Komponente gegen derartige Eingriffe geschützt.

Vorteilhaft besteht die Hardware-Eigenschaft während des kompletten Daseins der Komponente.

Vorzugsweise ist die Hardware-Eigenschaft eine Seriennummer der Komponente.

Ferner kann die Hardware-Eigenschaft ein Text, eine Zahl in einem beliebigen Zahlensystem oder eine Folge aus Zahlen und Buchstaben sein. Zudem kann die Hardware-Eigenschaft auch eine MAC-Adresse sein.

Der private Schlüssel ist vorteilhaft geheim und nicht in der Speichereinheit der Komponente hinterlegt.

Es ist jedoch auch möglich, dass der private Schlüssel zwar in der Speichereinheit hinterlegt, aber nicht aus der Speichereinheit auslesbar ist.

Der öffentliche Schlüssel und der Modul sind öffentlich. Der öffentliche Schlüssel und/oder der Modul können beispielsweise in der Speichereinheit hinterlegt sein, auf einem Speichermedium mitgeliefert werden oder von einem Server über ein Netzwerk, z. B. Internet, bereitgestellt werden.

Der öffentliche Schlüssel und/oder der Modul können beispielsweise auch auf der überlagerten Steuereinheit hinterlegt sein.

Es sind jedoch auch Realisierungsvarianten (Use Cases) denkbar, die erfordern, dass der öffentliche Schlüssel auch nicht öffentlich zugänglich bzw. geheim ist. Dies ist beispielsweise dann der Fall, wenn ein Re-Labeln ohne Kenntnis des privaten Schlüssels im Feld erlaubt sein soll.

In einer weiteren vorteilhaften Ausführungsform ist der Modul ein fester Wert, der durch die Auswahl des kryptografischen Verfahrens fest definiert (Standardwert) ist. In diesem Fall muss der Modul nicht übergeben bzw. hinterlegt werden.

Auch andere Bereitstellungswege des öffentlichen Schlüssels und/oder Moduls sind denkbar.

Es ist jedoch kein besonders abgesicherter Bereitstellungsweg des öffentlichen Schlüssels nötig.

Vorzugsweise werden der private Schlüssel, der öffentliche Schlüssel und der Modul bei einem Maschinenbauer erzeugt.

Vorzugsweise wird der Komponentenwert beim Maschinenbauer verschlüsselt. So kann vermieden werden, dass der private Schlüssel in den Besitz eines unberechtigten Dritten gelangt.

Der private Schlüssel ist vorteilhaft geheim. Vorzugsweise besitzt nur der Maschinenbauer den privaten Schlüssel.

In einer weiteren vorteilhaften Ausführungsform der Erfindung ist der Komponentenwert ein Hashwert, wobei der Hashwert mittels einer definierten Funktion, insbesondere einer Hashfunktion, auf Basis der eindeutigen Komponenteneigenschaft erzeugt wird.

Der Hashwert ist ein alphanumerischer Wert, der durch eine besondere Form der Hashfunktion erzeugt wird. Die Besonderheit an dieser mathematischen Funktion ist, dass sie eine beliebig lange Zeichenfolge auf eine Zeichenfolge mit fester Länge abbildet.

Vorteilhaft wird die Hashfunktion SHA-512 eingesetzt. Auch andere Hashfunktionen sind möglich.

Ferner sind auch andere Funktionen denkbar, die eine Abbildung einer ersten, beispielsweise großen, Eingabemenge auf eine zweite, beispielsweise kleinere, Zielmenge ermöglichen.

Zudem ist auch eine Umwandlung der Komponenteneigenschaft in einen ASCII-Code oder Binärcode oder in einen anderen Code denkbar.

In einer weiteren vorteilhaften Ausführungsform der Erfindung wird die Komponente mit einer Recheneinheit verbunden.

In einer weiteren vorteilhaften Ausführungsform der Erfindung wird die eindeutige Komponenteneigenschaft von der Recheneinheit zur Ermittlung des Komponentenwerts ausgelesen.

"Ermittlung" bedeutet hierbei insbesondere: Der Komponentenwert wird erneut erzeugt (z. B. mittels Hashfunktion) oder ausgelesen (z. B. aus Speichereinheit).

Vorzugsweise ist in der Recheneinheit ein Programm hinterlegt, in welchem der Ablauf des erfindungsgemäßen Verfahrens implementiert ist.

Vorzugsweise ist das erfindungsgemäße im Programm implementierte Verfahren zur Authentifizierung verborgen, sodass für einen Nutzer der Recheneinheit und/oder der Komponente nicht ersichtlich ist, wann die Authentifizierung stattfindet.

Das Verfahren zur Authentifizierung muss jedoch nicht verborgen sein. Vorteilhaft wird es jedoch derart hinterlegt, dass das Verfahren nicht umgangen und/oder weggelassen werden kann.

Dies soll einer Manipulation vorbeugen.

Vorzugsweise findet die Authentifizierung zu bestimmten Zeitpunkten, vorzugsweise im Rahmen eines automatisierten Programmablaufs, statt, z. B. beim Einschalten einer Maschine oder eines Systems, in welcher oder in welchem die Recheneinheit und die Komponente verbaut sind. Die Recheneinheit kann auf diese Weise auch zwei und mehr Komponenten auf Authentizität prüfen.

In einer weiteren vorteilhaften Ausführungsform der Erfindung wird von der Recheneinheit die ausgelesene Komponenteneigenschaft mittels der definierten Funktion auf einen Hashwert zur Ermittlung des Komponentenwerts abgebildet.

In anderen Worten bedeutet dies: Es gibt zwei bevorzugte Vorgehensweisen, um die Authentizität der Komponente zu prüfen.

Gemäß einer ersten beispielhaften Vorgehensweise ist die eindeutige Komponenteneigenschaft die Seriennummer der Komponente. Es sind auch andere Zahlen und/oder Buchstabenfolgen möglich. Der Komponentenwert ist in der ersten Vorgehensweise ebenso die Seriennummer. Die Seriennummer wird mittels des privaten Schlüssels und des Moduls zu einer verschlüsselten Seriennummer verschlüsselt. Die verschlüsselte Seriennummer wird auf einer nicht-flüchtigen Speichereinheit der Komponente gespeichert. In anderen Worten bedeutet dies: Die Komponente wird gekennzeichnet. Die verschlüsselte Seriennummer wird von der Recheneinheit mittels des öffentlichen Schlüssels und des Moduls zu einer entschlüsselten Seriennummer entschlüsselt. Die Recheneinheit liest zudem die, vorzugsweise in Klartext ebenso auf der Recheneinheit vorliegende, Seriennummer aus. Die Recheneinheit vergleicht zur Authentifizierung der Komponente die entschlüsselte Seriennummer mit der ausgelesenen Seriennummer. Die Recheneinheit bezeugt die Authentizität der Komponente, wenn die beiden Werte übereinstimmen.

Gemäß einer zweiten beispielhaften Vorgehensweise ist die eindeutige Komponenteneigenschaft ebenso die Seriennummer der Komponente. Es sind auch andere Zahlen und/oder Buchstabenfolgen möglich. Der Komponentenwert ist in der zweiten Vorgehensweise der Hashwert der Seriennummer. Der Hashwert wird mittels des privaten Schlüssels und des Moduls zu einem verschlüsselten Hashwert verschlüsselt. Der verschlüsselte Hashwert wird auf einer nicht-flüchtigen Speichereinheit der Komponente gespeichert. In anderen Worten bedeutet dies: Die Komponente wird gekennzeichnet. Der verschlüsselte Hashwert wird von der Recheneinheit mittels des öffentlichen Schlüssels und des Moduls zu einem entschlüsselten Hashwert entschlüsselt. Die Recheneinheit liest zudem die, vorzugsweise in Klartext ebenso auf der Recheneinheit vorliegende, Seriennummer aus und wandelt diese basierend auf einer Hashfunktion (die verwendete Hashfunktion ist vorteilhaft bekannt) in einen Hashwert. Die Recheneinheit vergleicht zur Authentifizierung der Komponente den entschlüsselten Hashwert mit dem auf Basis der ausgelesenen Seriennummer gebildeten Hashwert. Die Recheneinheit bezeugt die Authentizität der Komponente, wenn die beiden Werte übereinstimmen.

Ferner sind anstatt der Hashfunktion auch andersartige Verfremdungen der Komponenteneigenschaft denkbar.

Die Kennzeichnung der Komponente findet vorzugsweise in einem definierten Fertigungsschritt beim Maschinenbauer statt.

In einer weiteren vorteilhaften Ausführungsform der Erfindung wird ein Ergebnis des Vergleichs von dem entschlüsselten Komponentenwert mit dem von der Recheneinheit ermittelten Komponentenwert von der Recheneinheit mittels einer Ausgabeeinheit ausgegeben.

Die Ausgabeeinheit ist vorzugsweise als Display ausgeführt.

Vorteilhaft wird hierbei eine Meldung ausgegeben.

Ferner kann bei Nicht-Übereinstimmung ein Hochlauf der Maschine bzw. des Systems unterbrochen werden. Dies ist vorteilhaft im Programm der Recheneinheit implementiert.

Es ist ferner auch möglich, das Ergebnis in einem Fehlerspeicher, vorzugsweise in einem Fehlerspeicher der Recheneinheit, abzulegen.

Die Erfindung betrifft zudem eine Komponente geeignet für ein derartiges Verfahren, wobei die Komponente wenigstens eine eindeutige Komponenteneigenschaft und wenigstens eine nicht-flüchtige Speichereinheit aufweist.

In einer weiteren vorteilhaften Ausführungsform der Erfindung weist die Komponente wenigstens eine Schnittstelle auf zur Verbindung mit wenigstens einer Recheneinheit.

Die Verbindung kann eine drahtlose Verbindung oder eine verdrahtete Verbindung sein.

Die Schnittstelle ist vorzugsweise eine Datenschnittstelle.

Die Erfindung betrifft zudem eine Recheneinheit geeignet für ein derartiges Verfahren, wobei die Recheneinheit wenigstens eine Schnittstelle zur Verbindung mit wenigstens einer Komponente aufweist.

Die Verbindung kann eine drahtlose Verbindung oder eine verdrahtete Verbindung sein.

Die Schnittstelle ist vorzugsweise eine Datenschnittstelle.

Vorzugsweise wird mittels der Verbindung der Komponentenwert ermittelt.

In einer weiteren vorteilhaften Ausführungsform der Erfindung weist die Recheneinheit wenigstens eine Einheit zur Entschlüsselung eines verschlüsselten Komponentenwerts und zum Vergleichen des entschlüsselten Komponentenwerts mit dem von der Recheneinheit ermittelten Komponentenwert auf.

Die Erfindung betrifft zudem ein System umfassend wenigstens eine derartige Komponente und wenigstens eine derartige Recheneinheit und wenigstens eine Steuereinheit.

Die Steuereinheit ist hierbei vorzugsweise mit einer Recheneinheit über eine Schnittstelle verbunden. Die Verbindung kann eine drahtlose Verbindung oder eine verdrahtete Verbindung sein.

Die Steuereinheit stößt vorteilhaft den Ablauf des Verfahrens an bzw. ein Programm, in welchem der Ablauf implementiert ist.

Die Schnittstelle ist vorzugsweise eine Datenschnittstelle.

Die Erfindung ist besonders vorteilhaft für alle Teile der Lieferkette der Komponente. Die Erfindung bringt also Kundenvorteile für die gesamte Lieferkette mit sich.

Der Hersteller stellt die Komponente in einer Art her, welche für das erfindungsgemäße Verfahren geeignet ist. Der Hersteller hat somit keinen Zusatzaufwand wie die Generierung und Zuweisung von Seriennummernbändern an bestimmte Maschinenbauer. Seriennummernbänder sind zudem nur begrenzt verfügbar. Dieses Problem wird jedoch mit der Erfindung behoben.

Der Hersteller liefert die Komponente seinen Kunden, also an den Maschinenbauer. Der Maschinenbauer erzeugt vorteilhaft die beiden Schlüssel und den Modul und kennzeichnet die Komponente bzw. die Komponenten. Der private Schlüssel bleibt vorzugsweise geheim. Nur der Maschinenbauer hat darauf Zugriff. Der öffentliche Schlüssel und der Modul sind nicht geheim und können unverschlüsselt beispielsweise im Programm der Recheneinheit oder auch auf der Komponente selbst hinterlegt werden.

Der Maschinenbauer liefert die Komponente an seinen Kunden. Der Kunde des Maschinenbauers kann vorzugsweise auf den öffentlichen Schlüssel und den Modul zugreifen. Vorzugsweise wird das Authentifizierungsverfahren automatisch von der Recheneinheit bzw. Steuereinheit in Gang gesetzt.

Es ist jedoch auch ein symmetrisches Hash-Verfahren als kryptografisches Verfahren denkbar.

Es ist ferner denkbar, dass ein asymmetrisches Verfahren (samt privatem und öffentlichem Schlüssel) nur der Authentifizierung dient und dass zur Generierung des Schlüssels (zum Abspeichern im Gerät) lediglich ein symmetrisches Hash-Verfahren, z. B. um einen benötigten Datenspeicher im Gerät zu begrenzen, dient.

Im Folgenden wird die Erfindung anhand der in den Figuren dargestellten Ausführungsbeispiele näher beschrieben und erläutert. Es zeigen:
- FIG 1: eine erste beispielhafte Ausführung des erfindungsgemäßen Verfahrens,
- FIG 2: eine zweite beispielhafte Ausführung des erfindungsgemäßen Verfahrens,
- FIG 3: ein erstes beispielhaftes System aufweisend eine Komponente, eine Recheneinheit und eine Steuereinheit,
- FIG 4: ein zweites beispielhaftes System,
- FIG 5: ein drittes beispielhaftes System.

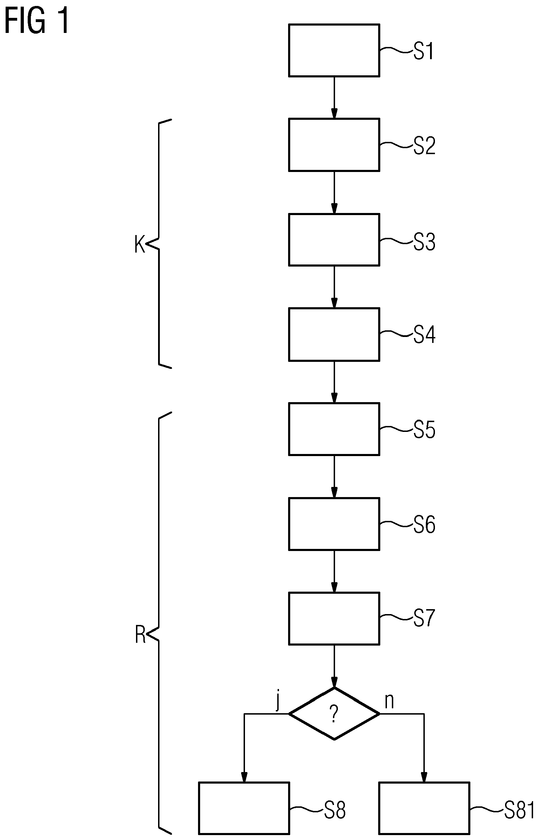

FIG 1 zeigt eine erste beispielhafte Ausführung des erfindungsgemäßen Verfahrens.

Das beschriebene Verfahren wird vorzugsweise bei einem Einschalten einer Komponente und/oder Recheneinheit bzw. beim Hochlauf eines Systems umfassend wenigstens eine Komponente und wenigstens eine Recheneinheit abgerufen bzw. beim Hochlauf eines Systems umfassend wenigstens eine Komponente, wenigstens eine Recheneinheit und wenigstens eine Steuereinheit abgerufen.

In einem Verfahrensschritt S1 wird ein eindeutiges Schlüsselpaar (ein privater Schlüssel und ein öffentlicher Schlüssel) und ein öffentliches Verschlüsselungs-/Entschlüsselungsmodul (kurz: Modul) auf Basis eines asymmetrischen Verschlüsselungsverfahrens erzeugt. Das asymmetrische Verschlüsselungsverfahren ist vorteilhaft das RSA-Verfahren. Die Vorgehensweise zum Erzeugen des Schlüsselpaars orientiert sich am RSA-Signaturverfahren (bereits weiter oben beschrieben).

Das Erzeugen des Schlüsselpaars wird vorzugsweise bei bzw. von einem Maschinenbauer getätigt, um zu verhindern, dass der private Schlüssel einem unberechtigten Dritten zufällt.

Das Schlüsselpaar und der Modul werden vorteilhaft der Recheneinheit bekannt gemacht. Wenigstens der private Schlüssel und der Modul werden der Recheneinheit bekannt gemacht.

In einem Verfahrensschritt S2 wird eine eindeutige Komponenteneigenschaft der Komponente ausgelesen bzw. ermittelt. In der beschriebenen ersten beispielhaften Ausführung ist die eindeutige Komponenteneigenschaft bereits eine Zahl bzw. eine Zahlenfolge bzw. eine Buchstabenfolge bzw. eine gemischte Zahlen-Buchstaben-Folge. Besonders gut eignet sich hierfür die Seriennummer der Komponente. Es sind jedoch auch andere Komponenteneigenschaften möglich.

Ein Komponentenwert entspricht in der Figur der eindeutigen Komponenteneigenschaft.

In einem Verfahrensschritt S3 wird der Komponentenwert mittels des privaten Schlüssels und des Moduls (kurz für Verschlüsselungs-/Entschlüsselungsmodul) verschlüsselt.

Der verschlüsselte Komponentenwert entspricht einer Signatur der Komponente bzw. einem eindeutigen Kennzeichen der Komponente.

Die Recheneinheit analysiert vorteilhaft alle angeschlossenen Komponenten und signiert diese.

In einem Verfahrensschritt S4 wird der verschlüsselte Komponentenwert auf einer nicht-flüchtigen Speichereinheit der Komponente gespeichert. Eine nicht-flüchtige Speichereinheit ist eine Speichereinheit deren gespeicherte Informationen auf Dauer erhalten bleiben, also auch während die Speichereinheit nicht in Betrieb ist oder nicht mit Strom versorgt wird. Vorzugsweise ist die nicht-flüchtige Speichereinheit als Read Only Memory (ROM) ausgeführt.

Die Verfahrensschritte S2 bis S4 betreffen im Wesentlichen die Komponente K.

Der Verfahrensschritt S1 betrifft im Wesentlichen ein Erzeugen der Signatur. Die Verfahrensschritte S2 bis S4 betreffen im Wesentlichen ein Signieren der Komponenten.

Die folgenden Verfahrensschritte betreffen im Wesentlichen die Recheneinheit bzw. die mit der Komponente verbundene Recheneinheit R.

Die folgenden Verfahrensschritte betreffen im Wesentlichen eine Überprüfung der Signatur.

In einem Verfahrensschritt S5 wird der verschlüsselte Komponentenwert von der Recheneinheit aus der Komponente ausgelesen bzw. anderweitig ermittelt. Mittels des öffentlichen Schlüssels und des Moduls entschlüsselt die Recheneinheit den verschlüsselten Komponentenwert.

Vorteilhaft gibt die Steuereinheit eine Anweisung bzw. ein Startsignal an die Recheneinheit, sodass in der Recheneinheit der Verfahrensschritt S5 ausgeführt wird.

Bei korrektem Schlüssel erhält die Recheneinheit in der Figur die eindeutige Komponenteneigenschaft.

In einem Verfahrensschritt S6 liest die Recheneinheit zudem die, vorzugsweise in Klartext ebenso auf der Komponente vorliegende, eindeutige Komponenteneigenschaft (in der Figur ist diese gleich dem Komponentenwert) aus.

In einem Verfahrensschritt S7 vergleicht die Recheneinheit die beiden Werte.

Es wird abgefragt - mit ? gekennzeichnet -, ob die Werte übereinstimmen.

Bei Übereinstimmung wird ein Pfad j gewählt, bei Nicht-Übereinstimmung wird ein Pfad n gewählt

In einem Verfahrensschritt S8 bezeugt die Recheneinheit bei Übereinstimmung der beiden Werte die Authentizität der Komponente.

Stimmen die beiden Werte nicht überein, kann die Recheneinheit in einem Verfahrensschritt S81 agieren, indem sie beispielsweise einen Hochlauf des Systems unterbricht bzw. abbricht. Es ist jedoch auch möglich, dass nur Funktionen der Komponente eingeschränkt werden. Es ist ferner denkbar, dass die Nicht-Übereinstimmung auf einem Fehlerspeicher der Recheneinheit und/oder Komponente abgelegt wird.

Die Verfahrensschritte S1, S2 bis S4 und S5 bis S8/S81 können von verschiedenen Gewerken und/oder zu verschiedenen Zeitpunkten bearbeitet werden.

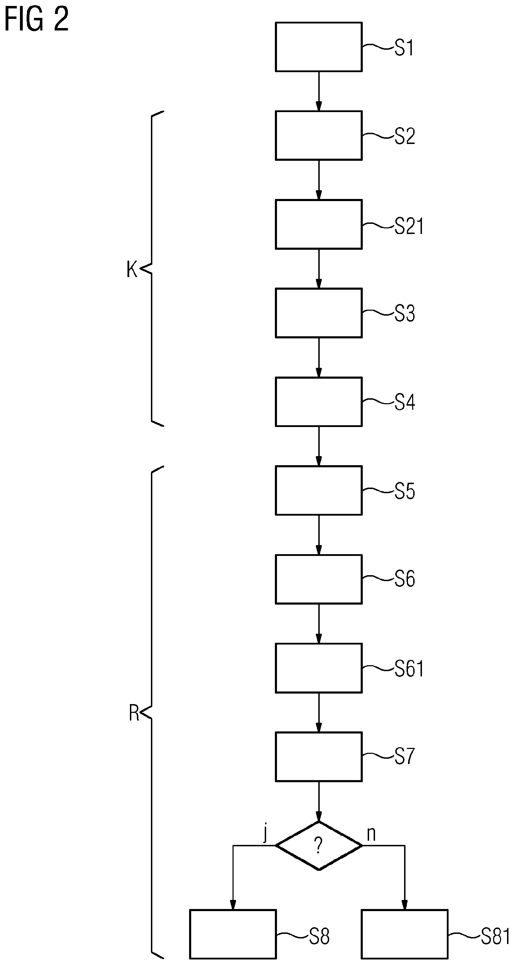

FIG 2 zeigt eine zweite beispielhafte Ausführung des erfindungsgemäßen Verfahrens.

Die Ausführung des erfindungsgemäßen Verfahrens in FIG 2 unterscheidet sich von der Ausführung in FIG 1 im Wesentlichen durch die Verfahrensschritte S21 und S61.

Im Verfahrensschritt S1 werden das eindeutige Schlüsselpaar und der öffentliche Modul erzeugt.

Im Verfahrensschritt S2 wird die eindeutige Komponenteneigenschaft der Komponente ausgelesen bzw. ermittelt.

In der beschriebenen zweiten beispielhaften Ausführung ist die eindeutige Komponenteneigenschaft vorteilhaft bereits eine Zahl bzw. eine Zahlenfolge bzw. eine Buchstabenfolge bzw. eine gemischte Zahlen-Buchstaben-Folge. Besonders gut eignet sich die Seriennummer der Komponente.

In einem Verfahrensschritt S21 wird basierend auf der eindeutigen Komponenteneigenschaft ein Hashwert mittels einer Hashfunktion gebildet.

Ein Komponentenwert entspricht in der Figur dem Hashwert.

Im Verfahrensschritt S3 wird der Komponentenwert mittels des privaten Schlüssels und des Moduls verschlüsselt.

Im Verfahrensschritt S4 wird der verschlüsselte Komponentenwert auf einer nicht-flüchtigen Speichereinheit der Komponente gespeichert.

Die Verfahrensschritte S2 bis S4 betreffen im Wesentlichen die Komponente.

Die folgenden Verfahrensschritte betreffen im Wesentlichen die Recheneinheit bzw. die mit der Komponente verbundene Recheneinheit.

Im Verfahrensschritt S5 wird der verschlüsselte Komponentenwert von der Recheneinheit aus der Komponente ausgelesen bzw. anderweitig ermittelt. Mittels des öffentlichen Schlüssels und des Moduls entschlüsselt die Recheneinheit den verschlüsselten Komponentenwert.

Vorteilhaft gibt die Steuereinheit eine Anweisung bzw. ein Startsignal an die Recheneinheit, sodass in der Recheneinheit der Verfahrensschritt S5 ausgeführt wird.

Bei korrektem Schlüssel erhält die Recheneinheit den Hashwert.

Im Verfahrensschritt S6 liest die Recheneinheit zudem die, vorzugsweise in Klartext ebenso auf der Komponente vorliegende, eindeutige Komponenteneigenschaft aus.

In einem Verfahrensschritt S61 wandelt die Recheneinheit die eindeutige Komponenteneigenschaft in einen Hashwert um.

Die dafür benötigte Hashfunktion kann beispielsweise in der nicht-flüchtigen Speichereinheit hinterlegt sein. Ferner ist es auch denkbar, dass die Recheneinheit auf Basis einer Bitlänge des Hashwertes auf die verwendete Hashfunktion schließt. Jedoch sind auch andere Wege möglich, eine Information über die verwendete Hashfunktion der Recheneinheit mitzuteilen.

Im Verfahrensschritt S7 vergleicht die Recheneinheit die beiden Werte, in der Figur die beiden Hashwerte.

Es wird abgefragt - mit ? gekennzeichnet -, ob die Werte übereinstimmen.

Bei Übereinstimmung wird ein Pfad j gewählt, bei Nicht-Übereinstimmung wird ein Pfad n gewählt

In einem Verfahrensschritt S8 bezeugt die Recheneinheit bei Übereinstimmung der beiden Werte die Authentizität der Komponente.

Stimmen die beiden Werte nicht überein, kann die Recheneinheit in einem Verfahrensschritt S81 agieren, indem sie beispielsweise einen Hochlauf des Systems unterbricht bzw. abbricht. Es ist jedoch auch möglich, dass nur Funktionen der Komponente eingeschränkt werden. Es ist ferner denkbar, dass die Nicht-Übereinstimmung auf einem Fehlerspeicher der Recheneinheit und/oder Komponente abgelegt wird.

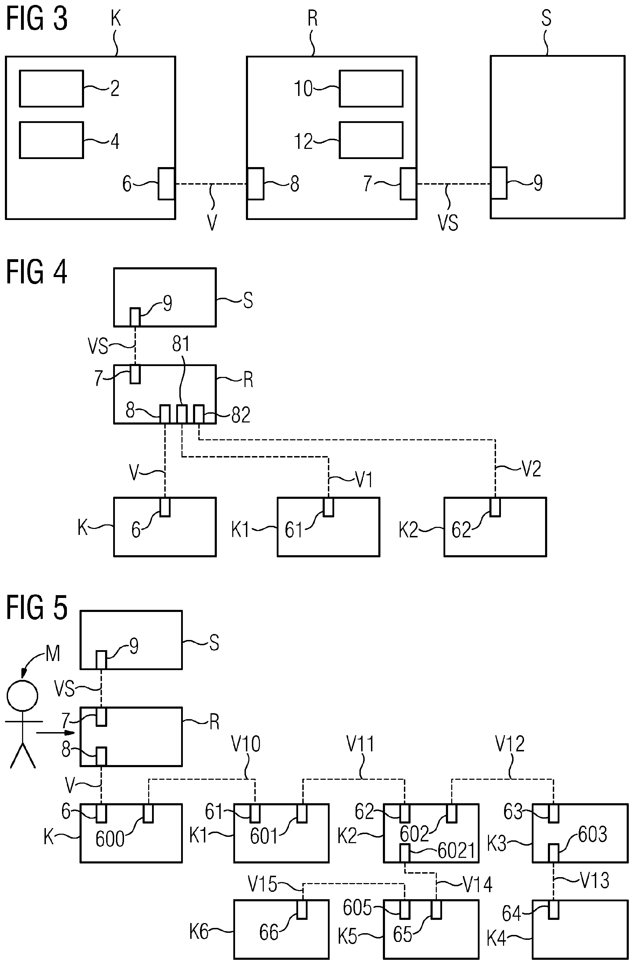

FIG 3 zeigt ein erstes beispielhaftes System aufweisend eine Komponente, eine Recheneinheit und eine Steuereinheit.

Die Komponente K weist in der Figur wenigstens eine eindeutige Komponenteneigenschaft 2 und wenigstens eine nicht-flüchtige Speichereinheit 4 auf. Ferner weist die Komponente eine Schnittstelle 6, insbesondere Datenschnittstelle, zur Verbindung mit einer Recheneinheit R auf.

Die Verbindung mit der Recheneinheit R kann mit einer verdrahteten oder drahtlosen Verbindung V bewerkstelligt werden.

Die Recheneinheit R weist wenigstens eine Einheit 10 zur Entschlüsselung eines verschlüsselten Komponentenwerts und zum Vergleichen des entschlüsselten Komponentenwerts mit dem von der Recheneinheit R ermittelten Komponentenwerts auf.

Ferner weist die Recheneinheit R eine Datenschnittstelle 8 zur Verbindung mit der Komponente K auf. Die Recheneinheit R umfasst in der Figur eine Ausgabeeinheit 12, beispielsweise ein Display.

Die Ausgabeeinheit 12 ist jedoch nicht obligatorisch.

Die Ausgabeeinheit kann jedoch auch an der Steuereinheit ausgeführt sein.

Die Recheneinheit R weist eine Schnittstelle 7, insbesondere Datenschnittstelle, zur Verbindung VS mit einer Steuereinheit S auf. Die Steuereinheit S weist hierzu eine Schnittstelle 9, insbesondere Datenschnittstelle auf.

FIG 4 zeigt ein zweites beispielhaftes System.

Die Figur zeigt die Steuereinheit S mit der Schnittstelle 9. Die Steuereinheit S ist über die Verbindung VS mit der Schnittstelle 7 der Recheneinheit R verbunden.

Die Recheneinheit R ist in der Figur mit drei Komponenten K, K1 und K2 verbunden. Es ist jedoch eine beliebige Anzahl an Komponenten möglich.

Ferner ist auch eine beliebige Anzahl an Recheneinheiten und/oder Steuereinheiten im System möglich.

Vorzugsweise weist die Recheneinheit für jede anzuschließende Komponente eine Schnittstelle, insbesondere Datenschnittstelle, auf.

Die Figur zeigt für die drei Komponenten K, K1 und K2 je eine Schnittstelle 8, 81 und 82. Die jeweilige Verbindung von Recheneinheit R und Komponente K, K1, K2 ist mit V, V1 und V2 gekennzeichnet.

Die Figur zeigt zudem eine Schnittstelle, insbesondere Datenschnittstelle, 6, 61 und 62 auf in der jeweiligen Komponente K, K1 und K2.

FIG 5 zeigt ein drittes beispielhaftes System.

Die Figur zeigt die Steuereinheit S mit der Schnittstelle 9. Die Steuereinheit S ist über die Verbindung VS mit der Schnittstelle 7 der Recheneinheit R verbunden.

Ein Bediener M kann optional auf die Recheneinheit zugreifen.

Die Recheneinheit R ist in der Figur mit der Komponente K verbunden. Eine beliebige Anzahl an Komponenten, in der Figur K1, K2, K3, K4, K5, K6, ist kaskadenartig an die Komponente K angeschlossen.

Die Komponente K weist hierzu die Schnittstellen 6 und 600 auf und ist über eine Verbindung V10 mit der Komponente K1 verbunden.

Die Komponente K1 weist die Schnittstellen 61 und 601 auf und ist über eine Verbindung V11 mit der Komponente K2 verbunden.

Die Komponente K2 weist die Schnittstellen 62, 602 und 6021 auf und ist über eine Verbindung V12 mit der Komponente K3 und über eine Verbindung V14 mit der Komponente K5 verbunden.

Die Komponente K3 weist die Schnittstellen 63 und 603 auf und ist über eine Verbindung V13 und über eine Schnittstelle 64 mit der Komponente K4 verbunden.

Die Komponente K5 weist die Schnittstellen 65 und 605 auf und ist über eine Verbindung V15 und über eine Schnittstelle 66 mit der Komponente K6 verbunden.

Vorzugsweise weist die Recheneinheit für jede anzuschließende Komponente eine Schnittstelle, insbesondere Datenschnittstelle, auf.

## Patentansprüche

1. Verfahren zur Authentifizierung einer Komponente (K...K6) durch eine Recheneinheit (R),
wobei ein auf einer eindeutigen Komponenteneigenschaft (2) basierender Komponentenwert mittels eines privaten Schlüssels und eines Verschlüsselungs- und/oder Entschlüsselungsmoduls zu einem verschlüsselten Komponentenwert verschlüsselt wird,
wobei der verschlüsselte Komponentenwert auf einer nicht-flüchtigen Speichereinheit (4) der Komponente (K...K6) gespeichert wird,
wobei der verschlüsselte Komponentenwert von der Recheneinheit (R) mittels eines öffentlichen Schlüssels und des Verschlüsselungs- und/oder Entschlüsselungsmoduls zu einem entschlüsselten Komponentenwert entschlüsselt wird,
wobei die Recheneinheit (R) den Komponentenwert ermittelt,
wobei zur Authentifizierung der Komponente (K...K6) die Recheneinheit (R) den entschlüsselten Komponentenwert mit dem von der Recheneinheit (R) ermittelten Komponentenwert vergleicht,
wobei eine Authentizität der Komponente (K...K6) bei Übereinstimmung des entschlüsselten Komponentenwerts und des ermittelten Komponentenwerts bezeugt wird.

2. Verfahren nach Anspruch 1, wobei der private Schlüssel, der öffentliche Schlüssel und der Verschlüsselungs- und/oder Entschlüsselungsmodul auf Basis eines asymmetrischen kryptografischen Verfahrens erzeugt werden.

3. Verfahren nach einem der vorherigen Ansprüche, wobei das asymmetrische kryptografische Verfahren ein RSA-Verfahren ist.

4. Verfahren nach einem der vorherigen Ansprüche, wobei die eindeutige Komponenteneigenschaft eine Hardware-Eigenschaft ist.

5. Verfahren nach einem der vorherigen Ansprüche 3, wobei der Komponentenwert ein Hashwert ist, wobei der Hashwert mittels einer definierten Funktion, insbesondere einer Hashfunktion, auf Basis der eindeutigen Komponenteneigenschaft erzeugt wird.

6. Verfahren nach einem der vorherigen Ansprüche, wobei die Komponente (K...K6) mit einer Recheneinheit (R) verbunden wird.

7. Verfahren nach einem der vorherigen Ansprüche, wobei die eindeutige Komponenteneigenschaft von der Recheneinheit (R) zur Ermittlung des Komponentenwerts ausgelesen wird.

8. Verfahren nach einem der vorherigen Ansprüche, wobei von der Recheneinheit (R) die ausgelesene Komponenteneigenschaft mittels der definierten Funktion auf einen Hashwert zur Ermittlung des Komponentenwerts abgebildet wird.

9. Verfahren nach einem der vorherigen Ansprüche, wobei ein Ergebnis des Vergleichs von dem entschlüsselten Komponentenwert mit dem von der Recheneinheit (R) ermittelten Komponentenwert von der Recheneinheit (R) mittels einer Ausgabeeinheit (12) ausgegeben wird.

10. Komponente (K...K6) geeignet für ein Verfahren nach einem der Ansprüche 1 bis 9 aufweisend wenigstens eine eindeutige Komponenteneigenschaft und wenigstens eine nicht-flüchtige Speichereinheit (4).

11. Komponente (K...K6) nach Anspruch 10 aufweisend wenigstens eine Schnittstelle (6...6021) zur Verbindung mit einer Recheneinheit (R).

12. Recheneinheit (R) geeignet für ein Verfahren nach einem der Ansprüche 1 bis 9, aufweisend wenigstens eine Schnittstelle (8,81,82) zur Verbindung mit wenigstens einer Komponente (K...K6).

13. Recheneinheit (R) nach Anspruch 12 aufweisend wenigstens eine Einheit (10) zur Entschlüsselung eines verschlüsselten Komponentenwerts und zum Vergleichen des entschlüsselten Komponentenwerts mit dem von der Recheneinheit (R) ermittelten Komponentenwert.

14. System umfassend wenigstens eine Komponente (K...K6) nach einem der Ansprüche 10 oder 11, wenigstens eine Recheneinheit (R) nach einem der Ansprüche 12 oder 13 und wenigstens eine Steuereinheit (S).
